# EUROPEAN PATENT APPLICATION

(11) **EP 4 603 360 A1**
(43) Date of publication of application: **20.08.2025**
(21) Application number: 23877174.5
(22) Date of filing: 29.09.2023
(51) Int. Cl.: B60W 50/10, B60W 40/02, B60W 40/08, B62D 1/04, B62D 6/00, G08G 1/16

(54) **CONTROL SYSTEM, VEHICLE, AND CONTROL PROGRAM**

(30) Priority: 13.10.2022 JP 2022165038; 21.10.2022 JP 2022169513; 24.10.2022 JP 2022170136
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/035742
(87) International publication number: WO 2024/080169

(57) **Abstract**

A control system mounted on an autonomous driving vehicle includes a control unit that moves a steering wheel housed in a seat of the autonomous driving vehicle to an outside of the seat of the autonomous driving vehicle in a case in which a position of the autonomous driving vehicle has entered a region where equipment of a steering wheel is necessary from an outside of the region.

## Description

### Technical Field

The present disclosure relates to a control system mounted on an autonomous driving vehicle, a vehicle, and a control program.

### Background Art

Patent Literature 1 discloses a vehicle having an autonomous driving function.

### Citation List

### Patent Literature

Patent Literature 1: Japanese Patent Application Laid-Open (JP-A) No. 2022-035198

### SUMMARY OF INVENTION

### Solution to Problem

A control system according to a first aspect of the present disclosure is a control system mounted on an autonomous driving vehicle, and includes a control unit that moves a steering wheel housed in a seat of the autonomous driving vehicle to an outside of the seat of the autonomous driving vehicle in a case in which a position of the autonomous driving vehicle has entered a region where equipment of a steering wheel is necessary from an outside of the region.

A control system according to a second aspect of the present disclosure is a control system mounted on an autonomous driving vehicle, and includes a control unit that limits, in a case in which an occupant who steers a steering wheel that is housed in a seat of the autonomous driving vehicle or deployed in a steerable state outside the seat of the autonomous driving vehicle is an occupant who is not intended to drive, a traveling time of the autonomous driving vehicle in a case in which the steering wheel is moved to the outside of the seat of the autonomous driving vehicle and is in a steerable state.

According to a control system according to a third aspect of the present disclosure, in the first or second aspect, the control unit moves the steering wheel housed in the seat of the autonomous driving vehicle to the outside of the seat of the autonomous driving vehicle in a case in which a position of the autonomous driving vehicle has entered a region where equipment of a steering wheel is necessary from an outside of the region.

A program according to a fourth aspect of the present disclosure causes a computer to function as the control unit of the control system according to any one of the first to fourth aspects.

A control system according to a fifth aspect of the present disclosure includes an operation body that is movable between an operation position where an occupant is able to perform a driving operation and a storage position where the operation body is retracted from an inner living space; a travel control unit that performs travel control without the driving operation of the occupant, and performs travel control in accordance with an operation on the operation body in a case in which the operation body is disposed at the operation position and operated by the occupant; a position information acquisition unit that acquires position information indicating a traveling position; an acquisition unit that acquires region information including necessity of disposition of the operation body at the operation position for each region; and a disposition control unit that disposes the operation body at the operation position in a case in which a vehicle enters a region where the operation body needs to be disposed at the operation position.

A control system according to a sixth aspect includes, in the fifth aspect, a reception unit that receives disposition of the operation body at the operation position by the occupant, in which the disposition control unit disposes the operation body at the operation position in a case in which the reception unit receives disposition of the operation body at the operation position.

According to a control system of a seventh aspect, in the fifth or sixth aspect, a plurality of the operation bodies having different operation modes for driving operations are provided, and the region information includes information indicating a necessary operation mode of an operation body, and, in a case in which an operation body is disposed at the operation position, the disposition control unit selects an operation body of which an operation mode corresponds to the region information, and disposes the operation body at the operation position.

According to a control system of an eighth aspect, in the sixth or seventh aspect, a plurality of the operation bodies having different operation modes for driving operations are provided, the control system further comprises a reception unit that receives the occupant's selection of an operation body, and, in a case in which an operation body is disposed at the operation position, the disposition control unit disposes an operation body selected by the occupant from among the plurality of operation bodies at the operation position.

According to a control system of a ninth aspect, in any one of the fifth to eighth aspects, the operation body includes a steering wheel whose traveling direction is changed by rotation operation.

In a control system according to a tenth aspect, in any one of the 5 to 8 aspects, the operation body is a cross key that is subjected to a key operation corresponding to an advancing direction of the vehicle such that the advancing direction is changed according to the key operation.

According to a control system of an eleventh aspect, in any one of the fifth to eighth aspects, the operation body is a stick that is subjected to a tilt operation such that an advancing direction of the vehicle is changed in a tilt direction.

A vehicle according to a twelfth aspect includes the control system according to any one of the fifth to eleventh aspects.

A control program according to a thirteenth aspect causes a computer to execute a disposition unit that moves and disposes an operation body used for an occupant to perform a driving operation between an operation position where the occupant is able to perform the driving operation and a storage position where the operation body is retracted from an inner living space; a travel control unit that performs travel control according to an operation of the operation body in a case in which the operation body is disposed at the operation position, and performs travel control without a driving operation of the occupant in a case in which the operation body is disposed at the storage position; a position information acquisition unit that acquires position information indicating a traveling position; an acquisition unit that acquires region information including necessity of disposition of the operation body at the operation position for each region; and a disposition control unit that disposes the operation body at the operation position in a case in which the vehicle enters a region where the operation body needs to be disposed at the operation position.

The above summary of the disclosure does not enumerate all the necessary features of the present disclosure. A subcombination of these feature groups may also be disclosed.

### BRIEF DESCRIPTION OF DRAWINGS

Fig. 1 is a block diagram schematically showing an example of an autonomous driving vehicle.
Fig. 2 is a schematic top view showing an example of a seat of the autonomous driving vehicle.
Fig. 3 is a schematic front view showing an example of a steering wheel.
Fig. 4 is a block diagram showing an example of a functional configuration of a control device.
Fig. 5 is a flowchart showing an example of a processing routine executed by the control device.
Fig. 6 is a block diagram schematically showing an example of a hardware configuration of a computer functioning as the control device.
Fig. 7 is a flowchart showing an example of a processing routine executed by the control device.
Fig. 8 is a flowchart showing another example of a processing routine executed by the control device.
Fig. 9 is a block diagram schematically showing an example of the autonomous driving vehicle.
Fig. 10 is a schematic top view showing an example of a seat of the autonomous driving vehicle.
Fig. 11A is a front view schematically showing a steering wheel as an example of a handle.
Fig. 11B is a front view schematically showing a steering wheel as another example of a handle.
Fig. 11C is a front view schematically showing a controller as an example of a handle.
Fig. 11D is a perspective view of a main part showing a stick as an example of a handle.
Fig. 12 is a block diagram showing an example of a functional configuration of a main part in a control system.
Fig. 13 is a flowchart showing an example of a processing routine executed in the control system.

### DESCRIPTION OF EMBODIMENTS

Hereinafter, the present disclosure will be described through embodiments of the disclosure, but the following embodiments do not limit the disclosure according to the claims. Not all combinations of features described in the embodiments are essential to the disclosed solutions.

A conventional non-autonomous driving vehicle is provided with a steering wheel, but an autonomous driving vehicle at Level 6 does not require a steering wheel, and allows a living space in the vehicle to be designed more spaciously. Level 6 is a level representing autonomous driving, and corresponds to a level higher than Level 5 representing fully autonomous driving. Level 5 represents fully autonomous driving, but is at the same level as driving by a person, and there is still a probability that an accident or the like will occur. Level 6 represents a level higher than Level 5, and corresponds to a level at which a probability of the occurrence of an accident is lower than Level 5. Level 6 is realized by control at a nanosecond level.

In a case in which it is assumed that there will be regions with restrictions requiring a steering wheel (for example, certain states of the United States of America), and an autonomous driving vehicle travels across a region requiring no steering wheel and a region requiring a steering wheel, there is a risk of unconsciously violating the law. Also in a case in which a user desires to drive a vehicle by himself/herself for hobby or the like, a steering wheel is required. In this case, a space for taking in and out a steering wheel and a space for storing a steering system itself are required, and a living space of an autonomous driving vehicle is reduced.

Therefore, the control system of the embodiment is a system in which a steering wheel that enables a vehicle to be driven even with one hand is housed on a side surface of a seat, and the steering wheel automatically appears in a case in which the vehicle enters a region requiring steering wheel equipment due to restrictions. By eliminating the steering system from a living space of a vehicle, it is possible to design a living space of an autonomous driving vehicle at Level 6 more spaciously.

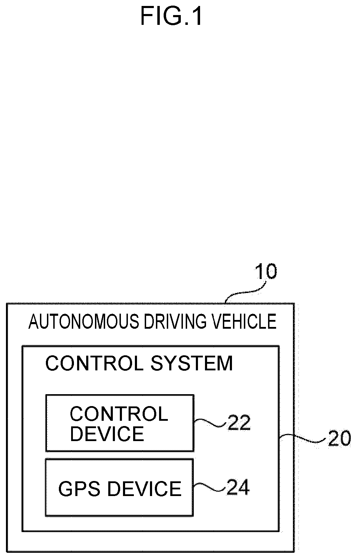

Fig. 1 is a schematic diagram of an example of an autonomous driving vehicle 10 according to the embodiment. The autonomous driving vehicle 10 includes a control system 20 mounted on the autonomous driving vehicle 10. The control system 20 includes a control device 22 and a global positioning system (GPS) device 24.

The GPS device 24 receives GPS signals from a plurality of GPS satellites, measures a position of the autonomous driving vehicle 10, and outputs position information indicating the measured position of the autonomous driving vehicle 10 to the control device 22. The position of the autonomous driving vehicle 10 is represented by, for example, a longitude and a latitude.

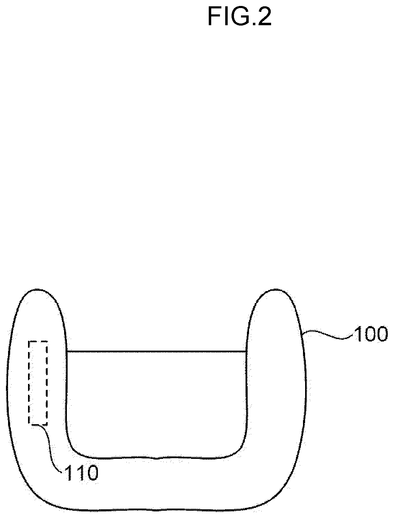

Fig. 2 is a schematic top view of an example of a seat 100 of the autonomous driving vehicle 10 according to the embodiment. The upper part of Fig. 2 corresponds to the front of the autonomous driving vehicle 10, and the lower part of Fig. 2 corresponds to the rear of the autonomous driving vehicle 10. A space capable of housing a steering wheel 110 is provided inside a side surface (left side surface in the example in Fig. 2) of the seat 100. The space capable of housing the steering wheel 110 may be provided inside a right side surface of the seat 100 or may be provided inside a bottom surface of the seat 100.

The steering wheel 110 is connected to the control device 22 in a wired or wireless manner, and in a case in which the steering wheel 110 is operated, a signal corresponding to the operation is output to the control device 22. As a result, the autonomous driving vehicle 10 can be driven in accordance with the operation of the steering wheel 110.

The steering wheel 110 can be moved to the outside of the seat 100, for example, by controlling a drive mechanism such as a motor. For example, the steering wheel 110 appears outside the seat 100 by being moved upward from the inside of the side surface of the seat 100, and an occupant of the autonomous driving vehicle 10 can drive the autonomous driving vehicle 10 by operating the steering wheel 110 that has appeared. The steering wheel 110 may be installed on a foldable arm or the like and configured to be able to appear in front of an occupant of the autonomous driving vehicle 10.

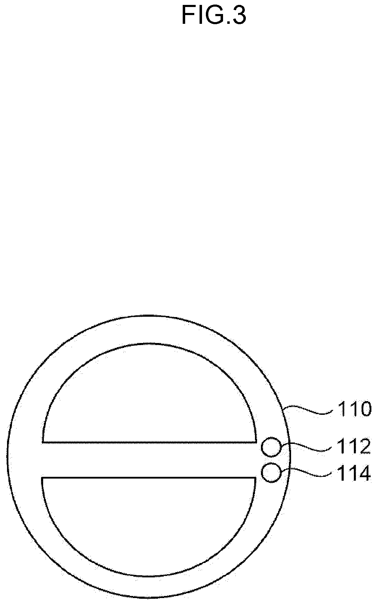

Fig. 3 is a schematic front view of the steering wheel 110 mounted on the autonomous driving vehicle 10 according to the embodiment. The steering wheel 110 includes a button 112 for operating an accelerator and a button 114 for operating a brake. The steering wheel 110 may include various buttons for operating a blinker, a back, and the like.

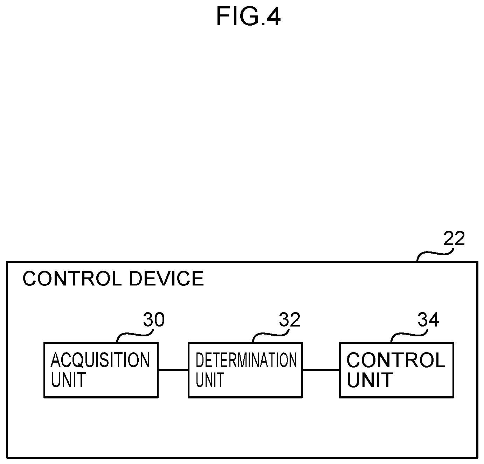

Fig. 4 is a block diagram showing an example of a functional configuration of the control device 22. The control device 22 includes an acquisition unit 30, a determination unit 32, and a control unit 34.

The acquisition unit 30 acquires position information of the autonomous driving vehicle 10 from the GPS device 24 at predetermined time intervals.

The determination unit 32 determines whether the position of the autonomous driving vehicle 10 has entered a region from outside a region where the steering wheel needs to be equipped on the basis of the position information of the autonomous driving vehicle 10 acquired by the acquisition unit 30. Specifically, for example, the determination unit 32 determines that the position of the autonomous driving vehicle 10 has entered the region from outside the region where the steering wheel needs to be equipped in a case in which the position of the autonomous driving vehicle 10 acquired immediately before is in the region where the steering wheel need not be equipped and the position of the autonomous driving vehicle 10 acquired at the current time is in the region where the steering wheel needs to be equipped.

The control unit 34 moves the steering wheel 110 housed in the seat 100 of the autonomous driving vehicle 10 to the outside of the seat 100 of the autonomous driving vehicle 10 by controlling a drive mechanism such as a motor.

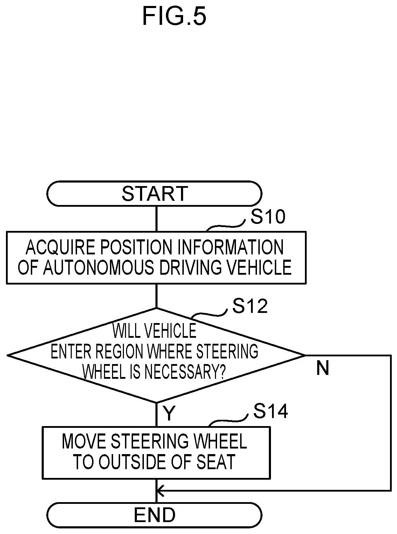

The control device 22 repeatedly executes the flowchart shown in Fig. 5.

In step S10, the acquisition unit 30 acquires the position information of the autonomous driving vehicle 10 from the GPS device 24.

In step S12, as described above, the determination unit 32 determines whether the position of the autonomous driving vehicle 10 has entered the region from outside the region where the steering wheel needs to be equipped on the basis of the position information of the autonomous driving vehicle 10 acquired in step S10. In a case in which this determination is positive, the processing proceeds to step S14.

In step S14, the control unit 34 moves the steering wheel 110 housed in the seat 100 of the autonomous driving vehicle 10 to the outside of the seat 100 of the autonomous driving vehicle 10 by controlling a drive mechanism such as a motor. In a case in which the processing in step S14 is ended, the processing of the flowchart is ended.

In a case in which the determination in step S12 is negative, the processing in step S14 is not executed, and the processing of the flowchart is ended.

As described above, according to the embodiment, a living space of the autonomous driving vehicle 10 can be designed more spaciously and more comfortably.

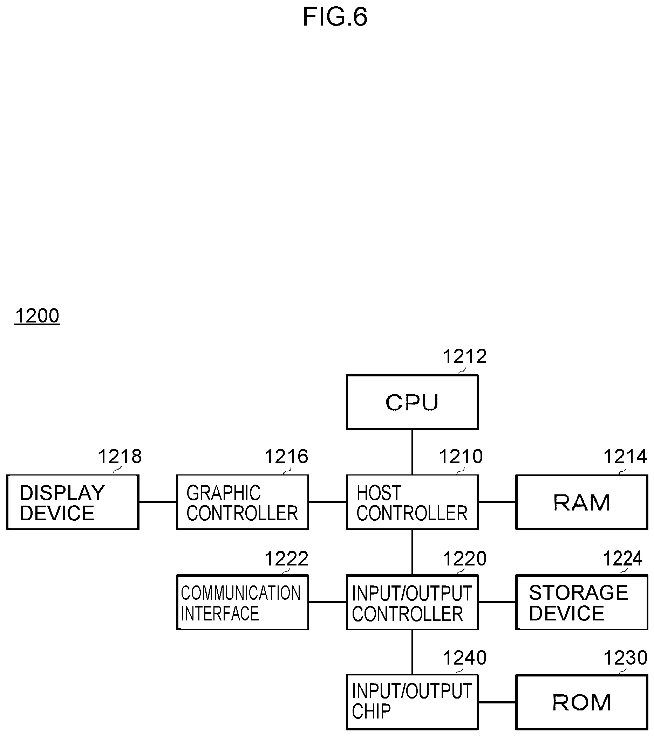

Fig. 6 schematically shows an example of a hardware configuration of a computer 1200 functioning as the control device 22. A program installed in the computer 1200 can cause the computer 1200 to function as one or more "units" of the device according to the embodiment, or cause the computer 1200 to execute an operation associated with the device according to the embodiment or one or more "units" thereof, and/or cause the computer 1200 to execute a process according to the embodiment or a stage of the process. Such a program may be executed by a CPU 1212 to cause the computer 1200 to execute specific operations associated with some or all of the blocks in the flowcharts and the block diagrams described in the present specification.

The computer 1200 according to the embodiment includes the CPU 1212, a RAM 1214, and a graphic controller 1216, which are mutually connected via a host controller 1210. The computer 1200 also includes input/output units such as a communication interface 1222, a storage device 1224, a DVD drive, and an IC card drive, which are connected to the host controller 1210 via the input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and the data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer readable storage medium such as a DVD-

ROM or an IC card. The program is read from a computer readable storage medium, installed in the storage device 1224, the RAM 1214, or the ROM 1230, which is also an example of a computer readable storage medium, and executed by the CPU 1212. The information processing described in such a program is read by the computer 1200 and provides cooperation between the program and the various types of hardware resources. A device or a method may be configured by implementing operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

The CPU 1212 may cause the RAM 1214 to read the whole or a necessary portion of a file or a database stored in an external recording medium such as the storage device 1224, a DVD drive (DVD-ROM), or an IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute, on the data read from the RAM 1214, various types of processing including various types of operations, information processing, condition determination, conditional branching, unconditional branching, information retrieval/replacement, and the like, which are described throughout the present disclosure and designated by a command sequence of a program, and writes back results thereof to the RAM 1214. The CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches a designated condition from the plurality of entries, read the attribute value of the second attribute stored in the entry, and thus acquire the attribute value of the second attribute associated with the first attribute satisfying a predetermined condition.

The program or software module described above may be stored in a computer readable storage medium on the computer 1200 or in the vicinity of the computer 1200. A recording medium such as a hard disk or a RAM provided in a server system connected to a dedicated communication network or the Internet can be used as a computer readable storage medium, thereby providing a program to the computer 1200 via the network.

The blocks in the flowcharts and block diagrams in the embodiment may represent stages of a process in which an operation is executed or "units" of a device having a function of executing the operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark)disk, a memory stick, and an integrated circuit card.

The computer readable instructions may include either source codes or object codes written in any combination of one or more programming languages, including assembler instructions, instruction-set-architecture (ISA) instructions, machine instructions, machinedependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

In a case in which it is assumed that there will be regions with restrictions requiring a steering wheel (for example, certain states of the United States of America), and an autonomous driving vehicle travels across a region requiring no steering wheel and a region requiring a steering wheel, there is a risk of unconsciously violating the law. Also in a case in which a user desires to drive a vehicle by himself/herself for hobby or the like, a steering wheel is required. In this case, a space for taking in and out a steering wheel and a space for storing a steering system itself are required, and a living space of an autonomous driving vehicle is reduced. On the other hand, in a case in which an occupant who is not intended to drive, such as an elderly person or an occupant who is not good at driving, drives an autonomous driving vehicle, the traveling safety of the autonomous driving vehicle may be reduced as the driving time becomes longer.

Therefore, the control system of the embodiment is a system in which a steering wheel that enables an autonomous driving vehicle to be driven even with one hand is housed on a side surface of a seat of the autonomous driving vehicle and can be deployed outside the seat of the autonomous driving vehicle in a steerable state as necessary. In the control system of the embodiment, in a case in which the occupant who steers the steering wheel is an occupant who is not intended to drive, the traveling time of the autonomous driving vehicle in a case in which the steering wheel is moved to the outside of the seat of the autonomous driving vehicle and is in a steerable state is limited. As a result, in a case in which an occupant who is not intended to drive steers the steering wheel, it is possible to prevent the autonomous driving vehicle from traveling beyond a time during which the occupant who is not intended to drive can safely steer the steering wheel, and to improve traveling safety of the autonomous driving vehicle.

Fig. 4 is a block diagram showing an example of a functional configuration of the control device 22. The control device 22 includes an acquisition unit 30, a determination unit 32, and a control unit 34.

The acquisition unit 30 acquires position information of the autonomous driving vehicle 10 from the GPS device 24 at predetermined time intervals. The acquisition unit 30 acquires information regarding an occupant sitting on the driver's seat of the autonomous driving vehicle 10, that is, steering the steering wheel 110. The "information regarding an occupant" also includes information indicating whether or not the occupant is a person who is assumed to drive the autonomous driving vehicle 10. Examples of an "occupant who is not intended to drive" include an occupant for whom one year has not elapsed since acquisition of a driver's license, an occupant who is an elderly person of 70 years old or more, and an occupant who is inexperienced in driving.

Specifically, the acquisition unit 30 acquires, for example, the information regarding the occupant input in advance. The acquisition unit 30 may acquire, for example, the information regarding the occupant acquired via an external server or the like. For example, the information regarding the occupant may be acquired by inquiring information regarding a plurality of occupants stored in the storage device 1224 in advance by using fingerprint authentication, person authentication such as face authentication, person authentication using a user ID, and the like with respect to the occupant riding in the autonomous driving vehicle 10.

The determination unit 32 determines whether or not the occupant who steers the steering wheel 110 is an occupant who is not intended to drive. As an example, the determination as to whether or not the occupant who steers the steering wheel 110 is an occupant who is not intended to drive is performed on the basis of the information regarding the occupant acquired by the acquisition unit 30. The determination unit 32 determines whether or not the occupant is an occupant who is not intended to drive on the basis of the acquired information regarding the occupant.

The control unit 34 moves the steering wheel 110 housed in the seat 100 of the autonomous driving vehicle 10 to the outside of the seat 100 of the autonomous driving vehicle 10 by controlling a drive mechanism such as a motor. The control unit 34 limits a time during which an occupant who is not intended to drive can safely steer the steering wheel 110, such as 30 minutes or 1 hour, as a traveling time during which the vehicle can travel. The traveling time can be set in advance according to the type of occupant who is not intended to drive. In a case in which the set traveling time has elapsed, as an example, the control unit 34 performs control so that manual driving of steering the steering wheel 110 cannot be performed, that is, the autonomous driving vehicle 10 can perform only autonomous driving.

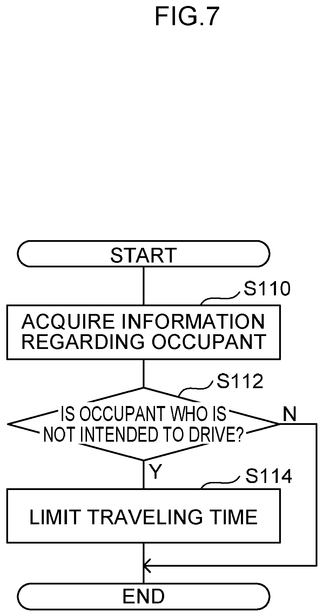

The control device 22 repeatedly executes the flowchart shown in Fig. 7.

In step S110, the acquisition unit 30 acquires the information regarding the occupant as described above.

In step S112, as described above, the determination unit 32 determines whether or not the occupant who steers the steering wheel 110 is an occupant who is not intended to drive on the basis of the information regarding the occupant acquired in step S110. In a case in which this determination is positive, the processing proceeds to step S114.

In step S114, the control unit 34 limits the traveling time of the autonomous driving vehicle 10 as described above. In a case in which the processing in step S114 is ended, the processing of the flowchart is ended.

In a case in which the determination in step S112 is negative, the processing in step S114 is not executed, and the processing of the flowchart is ended.

As described above, according to the embodiment, in a case in which the occupant who steers the steering wheel 110 is an occupant who is not intended to drive, the traveling time of the autonomous driving vehicle 10 is limited. As a result, in a case in which the occupant who is not intended to drive steers the steering wheel 110, the autonomous driving vehicle 10 does not travel beyond the time during which the occupant who is not intended to drive can safely steer the steering wheel 110, so that traveling safety of the autonomous driving vehicle 10 can be improved. Since the steering wheel 110 can be housed in the seat 100 of the autonomous driving vehicle 10 or can be moved to the outside of the seat 100 of the autonomous driving vehicle 10, the living space of the autonomous driving vehicle 10 can be designed more spaciously and more comfortably.

In the above embodiment, the determination unit 32 determines whether or not the occupant who steers the steering wheel 110 is an occupant who is not intended to drive, and in a case in which the occupant is not intended to drive, the control unit 34 limits the traveling time of the autonomous driving vehicle 10, but the present disclosure is not limited thereto.

The determination unit 32 may have a function of determining whether or not the position of the autonomous driving vehicle 10 has entered the region from outside the region where a steering wheel needs to be equipped on the basis of the position information of the autonomous driving vehicle 10 acquired by the acquisition unit 30. Specifically, for example, in a case in which the position of the autonomous driving vehicle 10 acquired immediately before is in a region where a steering wheel need not be equipped, and the position of the autonomous driving vehicle 10 acquired at the current time is in a region where a steering wheel needs to be equipped, the determination unit 32 determines that the position of the autonomous driving vehicle 10 has entered the region from outside the region where a steering wheel needs to be equipped.

In a case in which the determination unit 32 determines that the vehicle has entered the region from outside the region where the steering wheel needs to be equipped, the control unit 34 may move the steering wheel 110 housed in the seat 100 of the autonomous driving vehicle 10 to the outside of the seat 100 of the autonomous driving vehicle 10 by controlling a drive mechanism such as a motor.

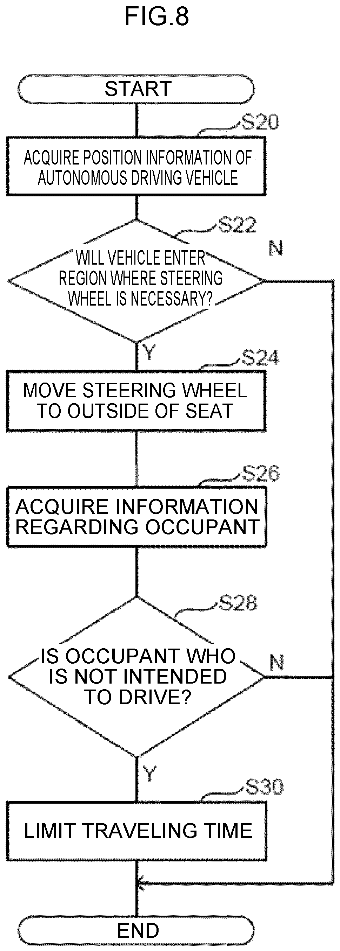

In this case, the control device 22 repeatedly executes the flowchart shown in Fig. 8.

In step S20, the acquisition unit 30 acquires the position information of the autonomous driving vehicle 10 from the GPS device 24.

In step S22, as described above, the determination unit 32 determines whether the position of the autonomous driving vehicle 10 has entered the region from outside the region where the steering wheel is required to be equipped on the basis of the position information of the autonomous driving vehicle 10 acquired in step S20. In a case in which this determination is positive, the processing proceeds to step S24.

In step S24, the control unit 34 moves the steering wheel 110 housed in the seat 100 of the autonomous driving vehicle 10 to the outside of the seat 100 of the autonomous driving vehicle 10 by controlling a drive mechanism such as a motor. On the other hand, in a case in which the determination in step S22 is negative, the processing in and after step S24 is not executed, and the processing of the flowchart is ended.

In a case in which the control unit 34 moves the steering wheel 110 to the outside of the seat 100 of the autonomous driving vehicle 10 in step S24, the acquisition unit 30 acquires the information regarding the occupant in step S26 as described above. Next, in step S28, as described above, the determination unit 32 determines whether or not the occupant who steers the steering wheel 110 is an occupant who is not intended to drive. In a case in which this determination is positive, the processing proceeds to step S30.

In step S30, the control unit 34 limits the traveling time of the autonomous driving vehicle 10 as described above. In a case in which the processing in step S30 is ended, the processing of the flowchart is ended. On the other hand, in a case in which the determination in step S28 is negative, the processing in step S30 is not executed, and the processing of the flowchart is ended.

As described above, according to the embodiment, it is possible to prevent unconscious violation of the law in a case in which the autonomous driving vehicle 10 travels across a region where the steering wheel 110 is unnecessary and a region where the steering wheel is necessary due to restrictions.

In a conventional non-autonomous driving vehicle, a steering device is installed and a steering wheel as a steering body is provided, and in the steering device of the non-autonomous driving vehicle, the steering wheel is operated to change an advancing direction of the non-autonomous driving vehicle according to the operation of the steering wheel. On the other hand, in an autonomous driving vehicle at a level (for example, Level 6) exceeding Level 5 (fully autonomous driving), a steering wheel or the like for an occupant to perform a driving operation is not required, and thus, it is possible to design a living space in the vehicle to be wide.

Level 6 is a level representing autonomous driving, and corresponds to a level higher than Level 5 representing fully autonomous driving. Level 5 represents fully autonomous driving, but is a level equivalent to that driven by a person, and there is still a possibility that an accident or the like will occur. Level 6 represents a level higher than Level 5. Level 6 is realized by control at a nanosecond level and corresponds to a level at which a probability of occurrence of an accident is lower than that at Level 5.

On the other hand, a region (for example, certain states of the United States of America) requiring an operation body such as a steering wheel for steering is also assumed for autonomous driving vehicles at Level 6 and Level 5. Such a region is regulated so that the installation of a steering wheel or the like is required for an autonomous driving vehicle by a law or the like. Thus, in a case in which the autonomous driving vehicle in which a steering wheel is not installed enters a region requiring the installation of a steering wheel from a region where a steering wheel is unnecessary, the autonomous driving vehicle does not satisfy regulations of the law or the like in the region.

In a case in which an occupant desires to perform a driving operation by himself/herself for hobby or the like, a steering wheel or the like is required even in an autonomous driving vehicle. However, in a case in which a steering wheel is installed at a predetermined position in advance, a living space (a space that can be used by an occupant) in a vehicle interior of the autonomous driving vehicle is reduced.

Therefore, in the embodiment, in an autonomous driving vehicle that satisfies at least the regulations of Level 5 (for example, at Level 6), an operation body is disposed at a predetermined operation position (a position on the front side of an occupant) in a case in which the occupant performs a driving operation, and the operation body is retracted from the operation position and stored at a position that does not reduce the living space in the vehicle interior during the autonomous driving in which the occupant does not perform the driving operation. In the embodiment, in a case in which the vehicle enters a region where an operation body such as a steering wheel needs to be disposed (equipped) at an operable position due to restrictions, the retracted operation body appears at the operation position. As a result, in the embodiment, the living space can be designed more spaciously in the autonomous driving vehicle at Level 6.

In the embodiment, the operation body can be operated for driving even with one hand. In the embodiment, an operation body selected from a plurality of operation bodies having different operation modes for a driving operation can be used, and the operation body can be selected from a plurality of operation bodies according to the preference of an occupant within a range satisfying the regulations of a region.

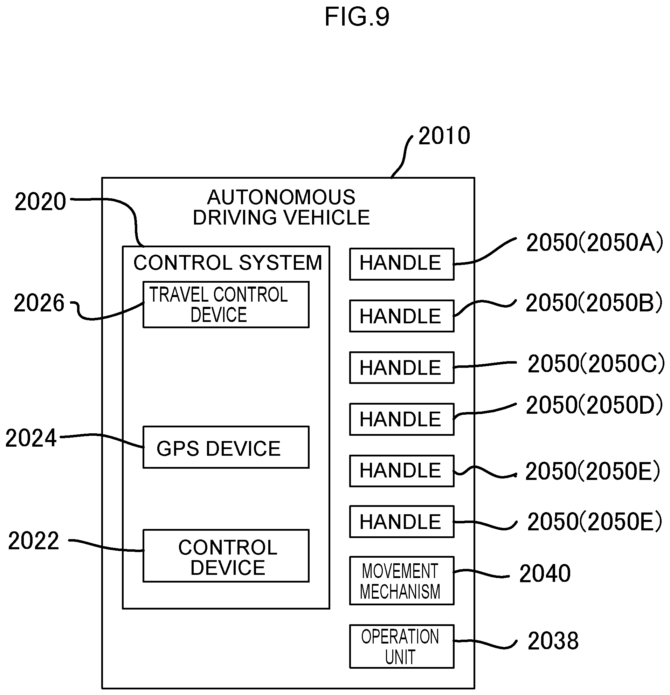

As an autonomous driving vehicle 2010 that is a vehicle according to the embodiment, an autonomous driving vehicle at Level 5 or higher (for example, Level 6) is applied. Fig. 9 is a schematic diagram showing main parts of an autonomous driving vehicle 10 according to the embodiment. The autonomous driving vehicle 2010 has an autonomous driving function of Level 5 or higher, and a detailed description of the autonomous driving function in the autonomous driving vehicle 2010 is omitted in the embodiment.

A control system 2020 is mounted on the autonomous driving vehicle 2010. The control system 2020 includes a control device 2022, a global positioning system (GPS) device 2024 serving as a position information acquisition unit, and a travel control device 2026 serving as a travel control unit.

The travel control device 2026 is responsible for autonomous driving control that satisfies the regulations of Level 6 (Level 5 or higher) in the autonomous driving vehicle 2010. The autonomous driving vehicle 2010 includes a handle 2050 as an operation body, and in the autonomous driving vehicle 10, an occupant operates the handle 2050 to enable traveling according to the driving operation of the occupant. In a case in which the occupant performs a driving operation by using the handle 2050, the travel control device 2026 performs control for causing the autonomous driving vehicle 2010 to travel according to the driving operation of the occupant. As a result, in the autonomous driving vehicle 2010, the travel control device 2026 can also cause the vehicle to travel at a level of Level 4 (advanced autonomous driving) or lower.

The GPS device 2024 receives GPS signals from a plurality of GPS satellites, measures a position of the autonomous driving vehicle 2010, and acquires position information indicating the measured position of the autonomous driving vehicle 2010. The position information of the autonomous driving vehicle 2010 is represented by, for example, longitude and latitude, and a traveling position of the autonomous driving vehicle 2010 is obtained by including map information. The GPS device 2024 outputs the position information of the autonomous driving vehicle 2010 to the control device 2022 and the travel control device 2026, and enables vehicle control based on the position information.

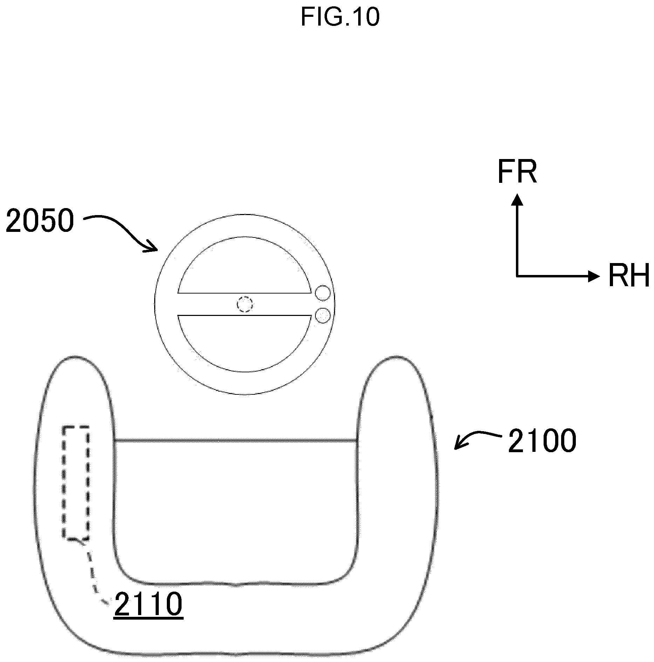

A seat 2100 on which an occupant (driver) sits is installed in the autonomous driving vehicle 2010. Fig. 10 is a plan view showing an outline of the seat 2100 of the autonomous driving vehicle 2010 as viewed from above. In the drawings, the front side, the right side in the vehicle width direction, and the upper side of the autonomous driving vehicle 2010 are indicated by arrows FR, RH, and UP, respectively.

As shown in Fig. 10, an operation body housing portion 2110 is provided inside (for example, the inside of the armrest portion) a side portion (a left side portion in Fig. 10) of the seat 2100. The operation body housing portion 2110 may be provided inside a right side portion of the seat 2100, may be provided inside a lower portion of the seat 2100 (for example, the inside of a seat cushion or a lower side of the seat cushion), or may be provided below an instrument panel not shown and on the front side of the vehicle. In the embodiment, one operation body housing portion 2110 is shown as an example, but the autonomous driving vehicle 10 is provided with the operation body housing portion 2110 divided into a plurality of portions.

In the autonomous driving vehicle 2010, an advancing direction (traveling direction) can be changed by using the handle 2050 serving as an operation body. The autonomous driving vehicle 2010 includes a plurality of handles 2050, and the plurality of handles 2050 are different in at least one of a form and an operation mode. The plurality of handles 2050 are different in at least an operation mode.

In the autonomous driving vehicle 2010, each of the handles 2050 is stored in the operation body housing portion 2110. A plurality of operation body housing portions 2110 are installed in the autonomous driving vehicle 2010. In the autonomous driving vehicle 2010, each of the handles 2050 is stored in any one of the plurality of operation body housing portions 2110, thereby preventing a living space from being reduced by the handles 2050.

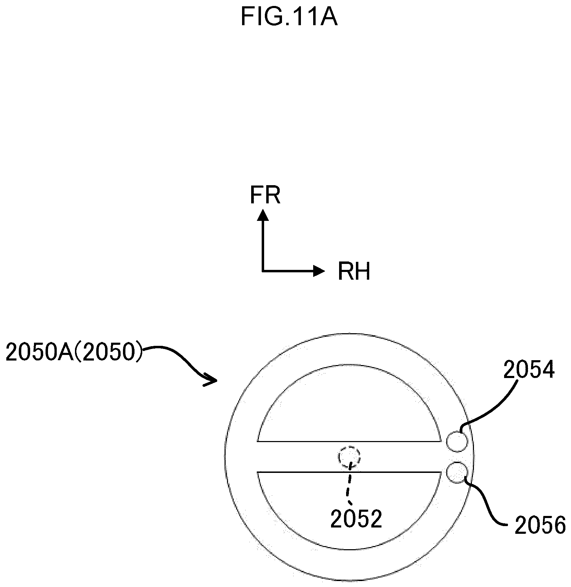

A predetermined position such as the front side of the seat 2100 on which an occupant sits is set as the operation position of the handle 2050, and the handle 2050 is provided by being disposed at the operation position, so that an operation (rotation operation) of the occupant can be performed. In each of Figs. 11A to 113D, an example of the handle 2050 is shown.

The handle 2050 (hereinafter, referred to as a handle 2050A in a case in which distinction is made) shown in Fig. 11A is a so-called steering wheel. The handle 2050A has a substantially circular outer shape (rim portion) and is connected to a shaft (steering shaft) 2052 of which a central portion (boss portion) is rotatably supported by the vehicle body. The handle 2050A is rotatable integrally with the shaft 2052.

The handle 2050A has an operation position on the front side of the seat 2100, and the handle 2050A is rotated, so that the shaft 2052 is integrally rotated therewith. A rotation angle of the shaft 2052 is detected by a rotation angle sensor (not shown). As a result, an electrical signal corresponding to the rotation operation is output from the handle 2050A, and an advancing direction of the autonomous driving vehicle 2010 can be changed according to the electrical signal.

An acceleration button 2054 and a braking button 2056 are installed on the handle 2050A. Each of the acceleration button 2054 and the braking button 2056 is operated to output an electrical signal corresponding to the operation (for example, a time during which the pressing operation is performed). In the handle 2050A, an electrical signal for accelerating the autonomous driving vehicle 2010 is output by operating the acceleration button 2054, and an electrical signal for decelerating the autonomous driving vehicle 2010 is output by operating the braking button 2056.

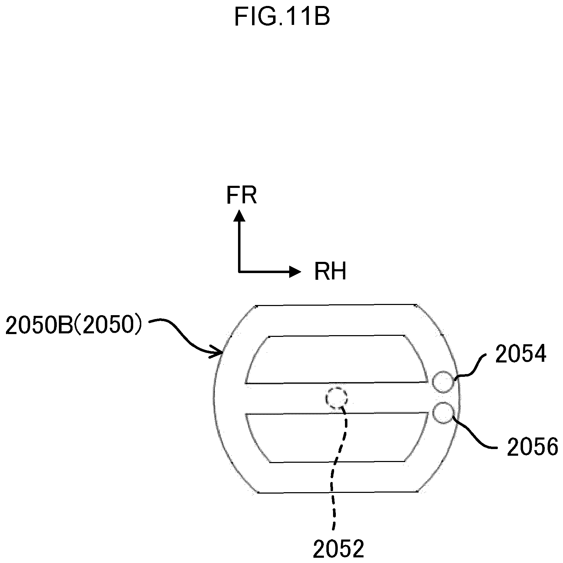

The handle 2050 (hereinafter, referred to as a handle 2050B in a case in which distinction is made) shown in Fig. 11B is a type of a D-type steering wheel, and an operation mode of the handle 2050B is similar to that of the handle 2050A, but a form thereof is different from that of the handle 2050A. The handle 2050B has a substantially rectangular outer shape (rim portion) in which a dimension in the front-rear direction is smaller than a dimension in the left-right direction in the straight traveling state of the autonomous driving vehicle 10, and the handle 2050B is used with a rotation angle of each of the right side and the left side set to 90 degrees or less, for example. The handle 2050B is connected to a shaft (steering shaft) 2052 of which a center portion (boss portion) is rotatably supported by the vehicle body, and the handle 2050B is rotatable integrally with the shaft 2052.

Similarly to the handle 2050A, the handle 2050B has an operation position on the front side of the seat 2100, and a rotation angle of the shaft 2052 is detected by a rotation angle sensor (not shown). As a result, an electrical signal corresponding to the rotation operation of the handle 2050B is output, and an advancing direction of the autonomous driving vehicle 2010 can be changed according to the electrical signal. The handle 2050B is provided with an acceleration button 2054 and a braking button 2056 that function similarly to those of the handle 2050A.

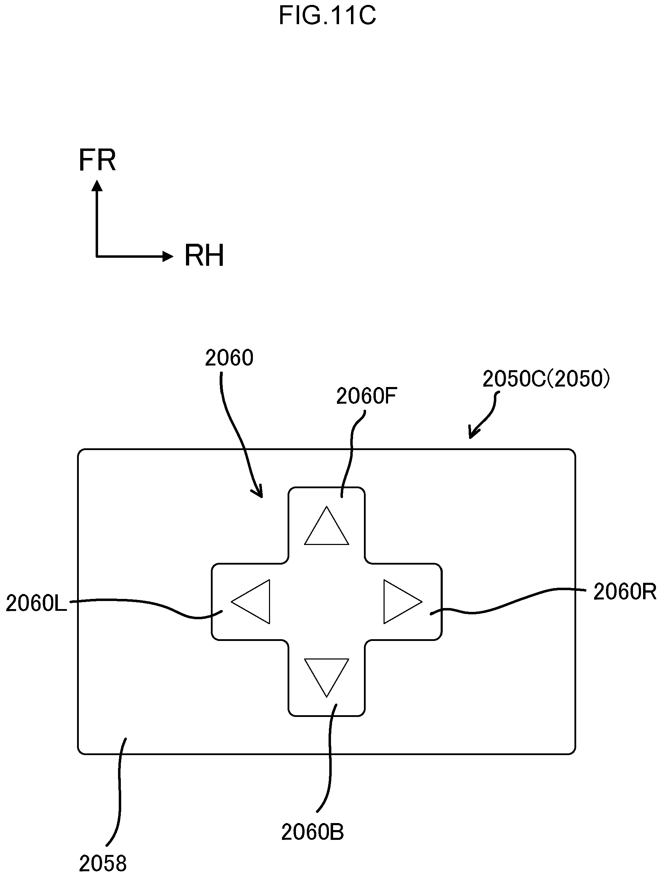

The handle 2050 (hereinafter, referred to as a handle 2050C in a case in which distinction is made) shown in Fig. 11C has a controller type using a cross key. In the handle 2050C, a cross key 2060 is disposed on a control board 2058 having a substantially rectangular flat plate shape, and the cross key 2060 functions as an operation body.

The handle 2050C has an operation position on the front side of the seat 2100, and the handle 2050C outputs an electrical signal corresponding to each of a front button 2060F, a rear button 2060B, a right button 2060R, and a left button 2060L of the cross key 2060 by being operated. In this case, in operation modes of the handle 2050C, an electrical signal for accelerating the autonomous driving vehicle is output by operating the button 2060F, and an electrical signal for decelerating the autonomous driving vehicle is output by operating the button 2060B. In operation modes of the handle 2050C, an electrical signal for changing an advancing direction of the autonomous driving vehicle 2010 to the right side is output by operating the button 2060R, and an electrical signal for changing the advancing direction of the autonomous driving vehicle 2010 to the left side is output by operating the button 2060L.

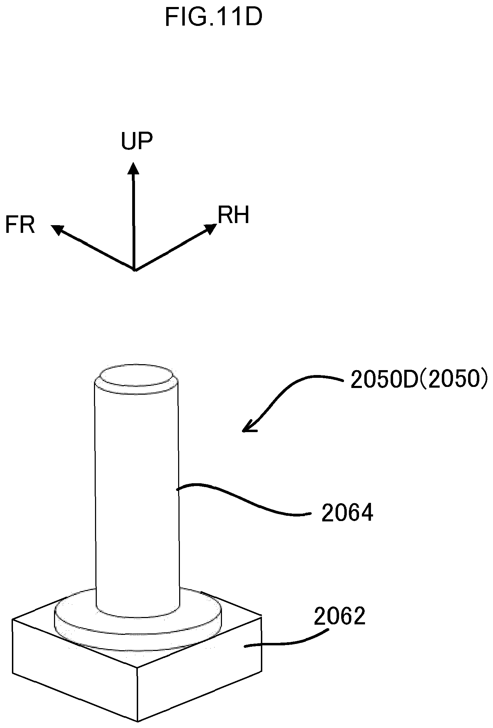

The handle 2050 (hereinafter, referred to as a handle 2050D in a case in which distinction is made) shown in Fig. 11D has a stick type. In the handle 2050D, a substantially cylindrical operation stick 2064 is erected on an upper surface of a rectangular block-shaped base 2062. In the handle 2050D, the operation stick 2064 functions as an operation body. In the handle 2050D, the operation stick 2064 can be tilted in all directions. In the handle 2050D, an electrical signal corresponding to a tilt direction and a tilt angle of the operation stick 2064 (an angle of the central axis of the operation stick 2064 with respect to the vertical direction) is output.

The handle 2050D has an operation position on the left front side or the right front side of the seat 2100, and can be set in advance by an occupant according to a dominant hand of the occupant, for example. In operation modes of the handle 2050D, an electrical signal for accelerating the autonomous driving vehicle 2010 is output by tilting the operation stick 2064 to the front side, and an electrical signal for decelerating the autonomous driving vehicle 2010 is output by tilting the operation stick 2064 to the rear side. In the operation mode of the handle 2050D, an electrical signal for changing an advancing direction of the autonomous driving vehicle 2010 to the right side is output by tilting the operation stick 2064 to the right side, and an electrical signal for changing the advancing direction of the autonomous driving vehicle 2010 to the left side is output by tilting the operation stick 2064 to the left side. In operation modes of the handle 2050D, an electrical signal for controlling the strength of each operation is output according to a tilt angle of the operation stick 2064.

The handle 2050 may include a touch panel type (hereinafter, referred to as a handle 2050E in a case in which distinction is made) and a motion sensor type (hereinafter, referred to as a handle 2050F in a case in which distinction is made). The positions of the handles 2050E and 2050F on the front side, the right front side, or the left front side of the seat 2100 are set in advance as operation positions. Detailed illustration of the handles 2050E and 2050F is omitted.

As the handle 2050E, for example, a touch panel on which a capacitance type (a selfinduction type or a mutual induction type) touch sensor is disposed is used. In operation modes of the handle 2050E, an electrical signal for changing an advancing direction of the autonomous driving vehicle 2010 to the right side or the left side according to a contact position on the touch panel, an electrical signal for accelerating the autonomous driving vehicle 2010, and an electrical signal for decelerating the autonomous driving vehicle 2010 are output.

As the handle 2050F, a motion sensor, a camera, or the like for detecting other movements of the occupant is used. The handle 2050F detects movement of the hand of an occupant and outputs an electrical signal corresponding to the movement of the hand. In operation modes of the handle 2050F, an electrical signal for changing an advancing direction of the autonomous driving vehicle 2010 to the right side or the left side, an electrical signal for accelerating the autonomous driving vehicle 10, and an electrical signal for decelerating the autonomous driving vehicle 2010 are output according to the movement of the hand of the occupant.

Each of the handles 2050 (handles 2050A to 2050F) may have various operation switches (operation buttons) such as a blinker switch for turning on left and right blinker lamps or functions of the operation switches.

Each of the handles 2050 (handles 2050A to 2050F) is connected or connectable to the travel control device 2026 in a wired or wireless manner, and an electrical signal (or a signal corresponding to the electrical signal) output from each of the handles 2050 is input to the travel control device 2026.

In the autonomous driving vehicle 2010, any one of the handles 2050A to 2050F is disposed at the operation position in a case in which a driving operation is performed by the occupant. In a case in which the driving operation is performed by the occupant, the travel control device 2026 reads the electrical signal output from the handle 2050 disposed at the operation position, and performs travel control of the autonomous driving vehicle 2010 according to the electrical signal. As a result, in the autonomous driving vehicle 2010, the advancing direction or the like is changed (steering or the like is performed) according to the occupant's operation on the handle 2050. In the autonomous driving vehicle 2010, a vehicle speed is changed according to an acceleration operation and a braking operation of the occupant.

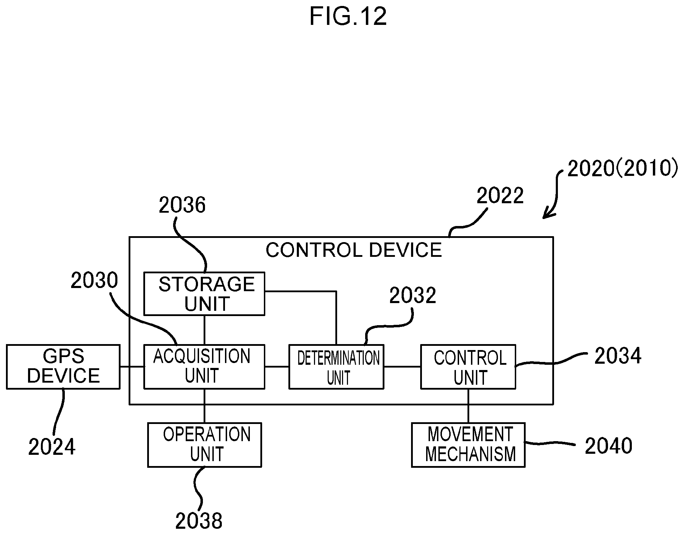

Fig. 12 is a block diagram showing an example of a functional configuration of the control device 2022.

As shown in Fig. 12, the control device 2022 includes an acquisition unit 2030, a determination unit 2032, a control unit 2034, and a storage unit 2036. The autonomous driving vehicle 2010 includes an operation unit 2038 configuring a reception unit and a movement mechanism 2040 functioning as a movement unit. The movement mechanism 2040 moves each of the handles 2050 between a storage position where the steering wheel is stored in the operation body housing portion 2110 and an operation position set for each of the handles 2050.

Region information defined by a law or the like for each region is acquired and stored in the storage unit 2036. The storage unit 2036 stores occupant information. The region information includes whether or not equipment (to be operably disposed at an operation position) of the handle 2050 is regulated at Level 6 (Level 5 or higher). The region information includes whether or not an operation mode of the handle 2050 is regulated in a case in which the equipment of the handle 2050 is regulated at Level 6 (Level 5 or higher), and includes information regarding the regulated operation mode of the handle 2050 in a case in which the operation mode of the handle 2050 is regulated.

The occupant information includes information identifying an occupant riding in the autonomous driving vehicle 2010 (particularly, an occupant riding as a driver), and various types of setting information set by the occupant.

The operation unit 2038 is implemented by a display, a keyboard (including a touch display), and the like. The operation unit 2038 is disposed at a position where the operation unit can be operated by the occupant seated on the seat 2100, such as an instrument panel or the periphery of the seat 2100, and the operation unit 2038 displays various types of information on the display and receives information input by the occupant according to the display.

The information input in the operation unit 2038 includes an operation position for each of the handles 2050 (in particular, the handles 2050D to 2050F) and the handle 2050 preferred by the occupant. The operation unit 2038 receives switching between autonomous driving in which the autonomous driving vehicle 2010 travels without using the handle 2050 and driving (hereinafter, non-autonomous driving or manual driving) in which the autonomous driving vehicle 2010 travels according to the occupant's operation on the handle 2050.

The acquisition unit 2030 acquires position information of the autonomous driving vehicle 2010 from the GPS device 2024 at predetermined time intervals. The acquisition unit 2030 acquires various types of information input by the occupant via the operation unit 2038. In this case, the acquisition unit 2030 stores the occupant information in the storage unit 2036.

The control unit 2034 controls the movement mechanism 2040 to move each of the handles 2050 between the storage position and the operation position. In this case, the control unit 2034 moves the handle 2050 between the storage position and the operation position by controlling an operation of an actuator such as a motor of the movement mechanism 2040. For example, in a case in which the handle 2050A or the handle 2050B is stored in the operation body housing portion 2110 on the side of the seat 2100, the movement mechanism 2040 moves the handle 2050 between the storage position in the operation body housing portion 2110 and the operation position on the front side of the seat 2100.

A foldable arm or the like can be applied to the movement mechanism 2040. In the movement mechanism 2040, the handle 2050 is attached to a distal end portion of the arm, and the handle 2050 is moved between the storage position and the operation position through rotation or expansion and contraction of the arm and is disposed at each movement position. The operation position of the handle 2050 may be determined according to an operation mode and a form, and various configurations according to the form of the handle 2050, the storage position (the operation body housing portion 2110), and the operation position of the handle 2050 can be applied as a configuration of the movement mechanism 2040 for each of the handles 2050.

On the basis of the position information of the autonomous driving vehicle 2010 acquired by the acquisition unit 2030, the determination unit 2032 determines whether the autonomous driving vehicle 2010 will enter a region where the handle 2050 needs to be equipped from the outside of the region, and whether the autonomous driving vehicle 2010 has entered a region outside the region where the handle 2050 needs to be equipped. In a case in which the determination unit 2032 determines that the autonomous driving vehicle 2010 will enter the region where the handle 2050 needs to be equipped, it determines whether an operation mode for the handle 2050 is regulated in the region.

In a case in which the determination unit 2032 determines that the autonomous driving vehicle 2010 will enter the region where the handle 2050 needs to be equipped (disposed at the operation position), the control unit 2034 disposes the handle 2050 in the operation mode regulated in the region where the vehicle will enter at the operation position. In a case in which an operation mode of the handle 2050 is not regulated, the control unit 2034 disposes the handle 2050 set by the occupant at the operation position.

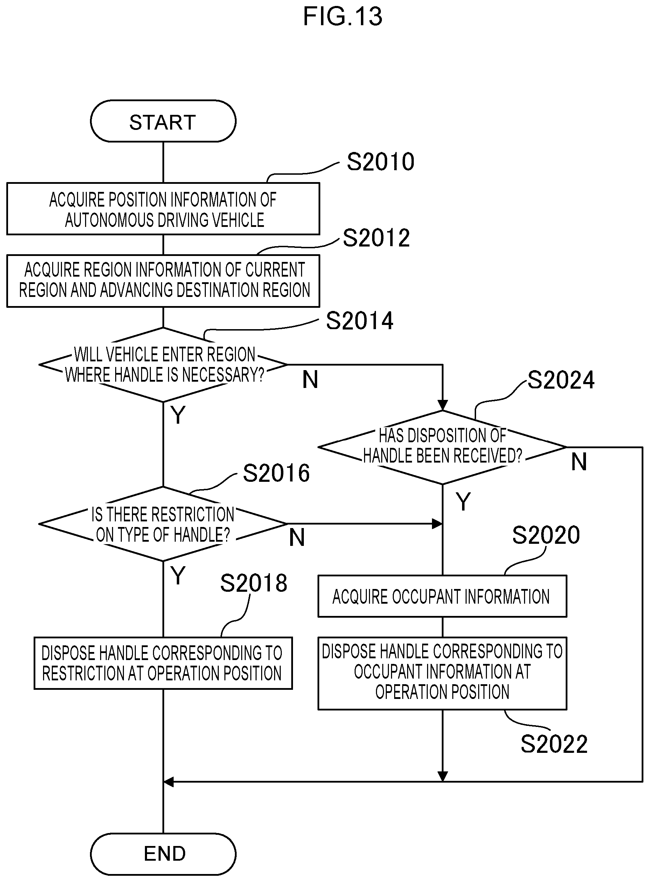

Fig. 13 is a flowchart showing an outline of processing of the control device 2022.

The flowchart of Fig. 13 is repeatedly executed in the control device 2022, and in step S2010, the acquisition unit 2030 acquires position information of the autonomous driving vehicle 2010 from the GPS device 2024. In step S2012, acquisition unit 2030 acquires region information regarding the current region (traveling region) and an advancing destination region. The advancing destination region may be determined according to an advancing direction of the autonomous driving vehicle, and the next region on a guidance route is applied in a case in which the vehicle is traveling toward a destination set in advance according to a navigation function.

Next, in step S2014, the determination unit 2032 determines whether or not the position of the autonomous driving vehicle 2010 will enter a region where the handle 2050 needs to be equipped from the outside of the region where the handle 2050 needs to be equipped on the basis of the position information of the autonomous driving vehicle 2010 acquired in step S2010 and the region information acquired in step S2012.

In a case in which the vehicle will enter the region where the handle 2050 needs to be equipped, the determination unit 2032 performs a positive determination in step 20 S14. As a result, in a case in which the processing proceeds to step S2016, the determination unit 2032 checks whether an operation mode is regulated for the handle 2050 to be equipped.

In step S2016, in a case in which the determination unit 2032 determines that the operation mode of the handle 2050 to be equipped in the region that the autonomous driving vehicle 2010 will enter from now is set to, for example, a steering wheel steered by being rotated, the processing proceeds to step S2018.

In step S2018, the control unit 2034 controls the movement mechanism 2040 to move the handle 2050 corresponding to the regulated operation mode from the storage position, and disposes the handle 50 at the operation position to equip the handle. For example, in a case in which it is regulated that the handle 2050 (the handle 2050A or the handle 2050B) having an operation mode similar to that of a steering wheel is to be equipped, the autonomous driving vehicle 2010 is equipped with the handle 2050A or the handle 2050B. In this case, in a case in which the handle 2050B is set to be equipped in advance according to the preference of the occupant, the autonomous driving vehicle 2010 is equipped with the handle 50B.

As a result, the autonomous driving vehicle 2010 is equipped with the handle 2050 such that the regulations of the region to newly enter are satisfied, and in a case in which the processing in step S2018 is ended, this flowchart is temporarily ended.

On the other hand, although it is regulated in the region information that the handle 2050 needs to be equipped, in a case in which there is no regulation regarding an operation mode, the determination unit 2032 performs a negative determination in step S2016. As a result, in a case in which the processing proceeds to step S2020, the control unit 2034 acquires occupant information, and in step S2022, the control unit 2034 moves the handle 2050 set by the occupant from the storage position and disposes the handle 2050 at the operation position. In a case in which the occupant does not set the handle 2050, the control unit 2034 requests the occupant to select the handle 2050 by using the operation unit 2038, and disposes the handle 2050 selected by the occupant at the operation position.

In a case in which the autonomous driving vehicle 2010 continuously travels in a region where equipment of the handle 2050 is not necessary (a case in which the vehicle does not enter a region where the equipment is regulated, or there is a time to spare before the entry, or the like), or the like, the determination unit 2032 performs a negative determination in step S2014 and proceeds to step S2024. In step S2024, the acquisition unit 2030 determines whether the occupant requests equipment of the handle 2050 at the operating position in order to use the handle 2050. In this case, in a case in which the occupant does not request the handle 2050 to be disposed (equipped) at the operation position, the acquisition unit 2030 performs a negative determination in step S2024 and temporarily ends this processing.

In contrast, in a case in which the occupant requests the handle 2050 to be disposed at the operation position, the acquisition unit 2030 performs a positive determination in step S2024. As a result, the processing proceeds to step S2020, whereby the handle 2050 set by the occupant is disposed at the operation position.

As a result, the autonomous driving vehicle 2010 can perform travel control according to the operation, and in a case in which the occupant operates the handle 2050, the travel control device 2026 starts travel control according to the operation of the handle 2050. The handle 2050 disposed at the operation position on the basis of the region information is returned to the storage position under the control of the control unit 2034 by entering a region where the equipment is not necessary from the region where equipment is necessary. The handle 2050 disposed at the operation position on the basis of the request from the occupant is returned to the storage position (operation body housing portion) by the control unit 2034 by the occupant instructing the handle to be stored via the operation unit 2038 or the like.

As described above, in the autonomous driving vehicle 2010, the handle 2050 is disposed and equipped at the operation position in a case in which the autonomous driving vehicle enters a region where the equipment of the handle 2050 is necessary. In the autonomous driving vehicle 2010, in a case in which an operation mode is regulated for the required handle 2050, the handle 2050 satisfying the regulated operation mode is disposed and equipped at the operation position. As a result, in a case in which the autonomous driving vehicle 2010 travels in the region where the equipment of the handle 2050 is necessary, it is possible to satisfy the regulations of the region.

The autonomous driving vehicle 2010 can travel according to a driving operation of the occupant, and in the autonomous driving vehicle 2010, the handle 2050 is disposed at the operation position according to an instruction of the occupant. The autonomous driving vehicle 2010 includes a plurality of handles 2050 having different operation modes and forms (shapes), and the occupant can designate the handle 2050 to be disposed at the operation position.

The handles 2050 include the handle 2050A that is a general steering wheel, the handle 2050B that can be operated in a lacing sense, and the handles 2050C and 2050D that can be operated in a game sense. Therefore, the occupant of the autonomous driving vehicle 2010 can enjoy the driving operation by selecting the desired handle 2050.

The autonomous driving vehicle 2010 can store occupant information for each occupant. Thus, even if the autonomous driving vehicle 2010 is a so-called sharing car, the autonomous driving vehicle 2010 can be used in the same sense as a vehicle owned by the occupant.

In the autonomous driving vehicle 2010, since the handle 2050 can be stored in the storage position, a living space in the vehicle interior can be designed more spaciously and more comfortably.

In the embodiment, the autonomous driving vehicle 2010 as a vehicle has been described as an example. However, the control system 2020 may be applied not only to a vehicle traveling on the ground but also to a moving object traveling on water, or may be applied to a moving object traveling on the ground or on water in a floating state.

Although the present disclosure has been described with reference to the embodiments, the technical scope of the present disclosure is not limited to the scope described in the embodiments. It is apparent to those skilled in the art that various modifications or improvements can be made to the above embodiments. It is apparent from the description of the claims that an aspect to which such modifications or improvements are added can also be included in the technical scope of the present disclosure.

It should be noted that the order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even if the operation flow in the claims, the specification, and the drawings is described using "first,", "next,", and the like for convenience, this does not mean that it is essential to perform in this order.

The disclosure of Japanese Patent Application No. 2022-165038 filed on October 13, 2022, the disclosure of Japanese Patent Application No. 2022-169513 filed on October 21, 2022, and the disclosure of Japanese Patent Application No. 2022-170136 filed on October 24, 2022 are incorporated herein by reference in their entirety.

### Reference Signs List

- 10: Autonomous driving vehicle
- 20: Control system
- 22: Control device
- 24: GPS device
- 30: Acquisition unit
- 32: Determination unit
- 34: Control unit
- 100: Seat
- 110: Steering wheel
- 112, 114: Button
- 1200: Computer
- 1210: Host controller
- 1212: CPU
- 1214: RAM
- 1216: Graphic controller
- 1218: Display device
- 1220: Input/output controller
- 1222: Communication interface
- 1224: Storage device
- 1230: ROM
- 1240: Input/output chip
- 2010: Autonomous driving vehicle
- 2020: Control system
- 2022: Control device
- 2024: GPS device
- 2026: Travel control device
- 2030: Acquisition unit
- 2032: Determination unit
- 2034: Control unit
- 2036: Storage unit
- 2038: Operation unit
- 2040: Movement mechanism
- 2050 (2050A to 2050F): Handle
- 2060: Cross key
- 2064: Operation stick
- 2110: Operation body housing portion

## Claims

1. A control system mounted on an autonomous driving vehicle, the control system comprising:
a control unit that moves a steering wheel housed in a seat of the autonomous driving vehicle to an outside of the seat of the autonomous driving vehicle in a case in which a position of the autonomous driving vehicle has entered a region where equipment of a steering wheel is necessary from an outside of the region.

2. A control system mounted on an autonomous driving vehicle, the control system comprising:
a control unit that limits, in a case in which an occupant who steers a steering wheel that is housed in a seat of the autonomous driving vehicle or deployed in a steerable state outside the seat of the autonomous driving vehicle is an occupant who is not intended to drive, a traveling time of the autonomous driving vehicle in a case in which the steering wheel is moved to the outside of the seat of the autonomous driving vehicle and is in a steerable state.

3. The control system according to claim 2, wherein the control unit moves the steering wheel housed in the seat of the autonomous driving vehicle to the outside of the seat of the autonomous driving vehicle in a case in which a position of the autonomous driving vehicle has entered a region where equipment of a steering wheel is necessary from an outside of the region.

4. A program for causing a computer to function as the control unit of the control system according to any one of claims 1 to 3.

5. A control system comprising:
an operation body that is movable between an operation position where an occupant is able to perform a driving operation and a storage position where the operation body is retracted from an inner living space;
a travel control unit that performs travel control without the driving operation of the occupant, and performs travel control in accordance with an operation on the operation body in a case in which the operation body is disposed at the operation position and operated by the occupant;
a position information acquisition unit that acquires position information indicating a traveling position;
an acquisition unit that acquires region information including necessity of disposition of the operation body at the operation position for each region; and
a disposition control unit that disposes the operation body at the operation position in a case in which a vehicle enters a region where the operation body needs to be disposed at the operation position.

6. The control system according to claim 5, comprising a reception unit that receives disposition of the operation body at the operation position by the occupant, wherein
the disposition control unit disposes the operation body at the operation position in a case in which the reception unit receives disposition of the operation body at the operation position.

7. The control system according to claim 5, wherein
a plurality of the operation bodies having different operation modes for driving operations are provided, and the region information includes information indicating a necessary operation mode of the operation body, and
in a case in which the operation body is disposed at the operation position, the disposition control unit selects an operation body of which an operation mode corresponds to the region information, and disposes the operation body at the operation position.

8. The control system according to claim 6, wherein
a plurality of the operation bodies having different operation modes for driving operations are provided,
the control system comprises a reception unit that receives the occupant's selection of an operation body, and
in a case in which the operation body is disposed at the operation position, the disposition control unit disposes an operation body selected by the occupant from among the plurality of operation bodies at the operation position.

9. The control system according to claim 5, wherein the operation body is a steering wheel that is subjected to a rotation operation to change an advancing direction of the vehicle.

10. The control system according to claim 5, wherein the operation body is a cross key that is subjected to a key operation corresponding to an advancing direction of the vehicle such that the advancing direction is changed according to the key operation.

11. The control system according to claim 5, wherein the operation body is a stick that is subjected to a tilt operation such that an advancing direction of the vehicle is changed in a tilt direction.

12. A vehicle comprising the control system according to claim 5.

13. A control program for causing a computer to function as:
a disposition unit that moves and disposes an operation body used for an occupant to perform a driving operation between an operation position where the occupant is able to perform the driving operation and a storage position where the operation body is retracted from an inner living space;
a travel control unit that performs travel control according to an operation of the operation body in a case in which the operation body is disposed at the operation position, and performs travel control without a driving operation of the occupant in a case in which the operation body is disposed at the storage position;
a position information acquisition unit that acquires position information indicating a traveling position;
an acquisition unit that acquires region information including necessity of disposition of the operation body at the operation position for each region; and
a disposition control unit that disposes the operation body at the operation position in a case in which a vehicle enters a region where the operation body needs to be disposed at the operation position.
